# EUROPÄISCHE PATENTANMELDUNG

(11) **EP 3 279 272 A1**
(43) Veröffentlichungstag der Anmeldung: **07.02.2018**
(21) Anmeldenummer: 17001324.7
(22) Anmeldetag: 01.08.2017
(51) Int. Cl.: C09B 67/02, H01F 1/44, B42D 25/369, B42D 25/378

(54) **VERFAHREN UND VORRICHTUNG ZUM ERZEUGEN VON KOMPOSITPARTIKELN**

(30) Priorität: 04.08.2016 DE 102016009514
(71) Anmelder: Giesecke+Devrient Currency Technology GmbH, 81677 München (DE)
(72) Erfinder: Schiffmann, Peter, 81673 München (DE); Imhof, Martin, 81927 München (DE)

(57) **Zusammenfassung**

Die Erfindung betrifft ein Verfahren zum Erzeugen von Kompositpartikeln (30) zur Verwendung als Füllmaterial von Mikrokapseln (20) oder als Druckfarbe, bei dem
- Farbmittel (34), wie Nanopartikel (34), mit gewünschten Eigenschaften bereitgestellt und in einem Bindemittel (36) gemischt werden,
- aus dem erzeugten Gemisch (38) durch mechanische Tröpfchenbildung flüssige, Farbmittel (34) enthaltende Komposittröpfchen (52) erzeugt werden, und
- die flüssigen Komposittröpfchen (52) verfestigt werden um feste, Farbmittel enthaltende Kompositpartikel (30) zu erzeugen.

Die Erfindung betrifft auch eine Vorrichtung zur Durchführung des Verfahrens, nach einem solchen Verfahren hergestellte Kompositpartikel, ein Verfahren zur Herstellung von Mikrokapseln mit Hilfe solcher Kompositpartikel sowie zugehörige Mikrokapseln.

## Beschreibung

Die Erfindung betrifft ein Verfahren und eine Vorrichtung zum Erzeugen von Kompositpartikeln zur Verwendung als Füllmaterial von Mikrokapseln oder als Druckfarbe, sowie die nach einem solchen Verfahren hergestellten Kompositpartikel. Die Erfindung betrifft auch ein Verfahren zur Herstellung von Mikrokapseln unter Verwendung solcher Kompositpartikel und zugehörige Mikrokapseln.

Im Sicherheitsdruck werden seit einiger Zeit verstärkt magnetische Partikel eingesetzt. Dabei ist Verwendung von Magnetpigmenten auf Basis von Hart- oder Weicheisen in Druckfarben zur Absicherung von Wertdokumenten grundsätzlich seit vielen Jahren bekannt. Mit einer entsprechenden Sensorik ist es möglich, Hart- und Weicheisen auf Grund der jeweiligen Koerzitivfeldstärke zu unterscheiden. Auch die magnetische Feldstärke von Farbschichten mit Magnetpigmenten kann mit einer entsprechenden Sensorik erfasst werden.

Magnetisch ausrichtbare Pigmente können verdruckt und durch ein geeignet orientiertes Magnetfeld beim Aushärten der Druckfarbe dauerhaft in einer bestimmten Orientierung fixiert werden. Daneben sind kürzlich auch reversibel magnetisch ausrichtbare Pigmente vorgeschlagen worden, die in einer flüssigkeitsgefüllten Mikrokapsel verkapselt sind, so dass sie auch im fertigen gedruckten Wertdokument noch interaktiv und reversibel magnetisch ausgerichtet werden können. Beispiele von Mikrokapseln mit derartigen reversibel ausrichtbaren Pigmenten sind in der Druckschrift WO 2013/056782 A1 beschrieben.

Gerade bei Mikrokapseln mit beweglichen magnetischen Inhaltspigmenten ist es von großer Bedeutung, dass sich die Pigmente im Inneren der Mikrokapseln durch eine äußere magnetische Kraft möglichst frei bewegen können. Dies erfordert eine gute Stabilisierung und Redispergierbarkeit der Inhaltspigmente im Trägerfluid der Mikrokapseln.

Ausgehend davon liegt der Erfindung die Aufgabe zugrunde, ein Verfahren und eine Vorrichtung zum Erzeugen von Pigmenten zur Verwendung als Füllmaterial von Mikrokapseln anzugeben. Diese Aufgabe wird durch die Merkmale der unabhängigen Ansprüche gelöst. Weiterbildungen der Erfindung sind Gegenstand der Unteransprüche.

Die Erfindung enthält ein Verfahren zum Erzeugen von Kompositpartikeln zur Verwendung als Füllmaterial von Mikrokapseln und/oder als Druckfarbe, bei dem
- Farbmittel, insbesondere Nanopartikel oder Farbstoffe, mit gewünschten Eigenschaften bereitgestellt und in einem Bindemittel gemischt werden,
- aus dem erzeugten Gemisch durch mechanische Tröpfchenbildung flüssige, die Farbmittel enthaltende Komposittröpfchen erzeugt werden, und
- die flüssigen Komposittröpfchen verfestigt werden um feste, Farbmittel enthaltende Kompositpartikel zu erzeugen.

Die Farbmittel können Nanopartikel und/ oder Farbstoffe sein. Nanopartikel sind im Bindemittel dispergiert, das Gemisch ist eine Dispersion. Farbstoffe sind in einem Lösungsmittel gelöst. Das Gemisch ist dann insbesondere eine Lösung umfassend das Lösungsmittel, das Bindemittel und die Farbstoffe. Im Folgenden werden einige Aspekte der vorliegenden Lösung teilweise nur am Beispiel von Nanopartikeln beschrieben, auch wenn diese Aspekte analog auf Farbstoffe anwendbar sind.

Als Nanopartikel werden dabei Partikel mit einer größten Abmessung zwischen 1 nm und 999 nm bezeichnet. Vorzugsweise liegt die größte Abmessung der verwendeten Nanopartikel zwischen 2 nm und 400 nm, besonders bevorzugt zwischen 5 nm und 300 nm.

Bei dem genannten Verfahren werden als Nanopartikel bevorzugt superparamagnetische Partikel, IR-absorbierende Nanopigmente, Titandioxid-Nanopigmente, Lumineszenz-Nanopigmente, oder eine Kombination der genannten Nanopartikel bereitgestellt und in dem Bindemittel dispergiert. Die Farbstoffe sind bevorzugt Lumineszenz- (insbesondere Fluroreszenz-) Farbstoffe und/oder IR-Farbstoffe.

Beim Einsatz superparamagnetischer Partikel wird durch das Bindemittel, insbesondere eine Polymermatrix, eine Oxidation der Partikel an Luft frühzeitig einschränkt, so dass die gewünschten magnetischen Eigenschaften und die Farbigkeit der Partikel weitestgehend erhalten bleiben. Die Teilchengrößen der superparamagnetischen Partikel liegen je nach Aggregierung mit Vorteil zwischen 10 nm und 500 nm, wobei die Aggregierung durch die Einbettung in das Bindemittel weitgehend konstant gehalten werden kann und eine weitere Aggregierung vermieden wird. Eine Weiterverarbeitung der Kompositpartikel in Druckfarben wird dadurch wesentlich erleichtert. Über eine Einfärbung des Bindemittels, beispielsweise eines Polymers, kann die visuelle Attraktivität der magnetischen Kompositpartikel weiter erhöht werden.

Eine Einfärbung des Bindemittels, beispielsweise eines Polymers, ist insbesondere vorteilhaft bei der Erzeugung von lumineszierenden Kompositpartikeln ausgehend von lumineszierenden Farbmitteln.

Beim Einsatz von, beispielsweise IR-absorbierenden, Nanopigmenten können nicht streuende Kompositpartikel erzeugt werden, welche sich in weiteren Prozessschritten einfach verarbeiten lassen.

Auch können kritische Feinstäube vermieden werden. Insbesondere wird eine Verteilung von Nanopartikeln vermieden, da diese in dem Kompositpartikel eingebunden sind.

Mit dem beschriebenen Verfahren können auch laserablatierbare Buntpigmente erzeugt werden, da die benötigten Komponenten, nämlich IR-Absorber und Buntpigment oder Lumineszenzmittel gemeinsam in das Bindemittel eindispergiert und damit auch gemeinsam in die erzeugten Kompositpartikel gepackt werden können.

Beim Einsatz von TiO₂-Nanopigmenten können nicht streuende, UV-absorbierende Kompositpartikel erzeugt werden, welche sich in weiteren Prozessschritten in Druckfarben einfach verarbeiten lassen. Die photokatalytische Wirkung der Nanopigmente kann nur auf das direkt das Nanopigment umgebende Polymer beschränkt sein, so dass eine eigentliche Farbe bzw. die Bindemittelmatrix der Farbe unverletzt bleibt.

Ausgehend von Lumineszenzfarbstoffen können vorliegend lumineszierende Kompositpartikel erzeugt werden. Geht man von Lumineszenz-Nanopigmenten aus, könnte eine unkontrollierte Aggregierung besser verhindert werden. Chemisch beständige, nicht streuende Lumineszenz-Kompositpartikel können auf Basis von Farbstoffen erzeugt werden, indem der Farbstoff in einem geeigneten Lösungsmittel gelöst wird, welches kompatibel zu dem den Farbstoff umhüllenden Bindemittel bzw. Polymermatrix gewählt wird. Idealerweise wird der Brechungsindex des Polymers ähnlich zu dem Brechungsindex des Bindemittels der Druckfarbe gewählt (Δn < 0,3, insbesondere Δn < 0,1), so dass nicht mehr oder nicht gelöste Farbstoffe als Partikel die Streuzentren bilden. Sind diese Streuzentren kleiner als 400 nm, so stellen sie keine im sichtbaren Spektralbereich streuenden und damit deckenden Körper dar.

Die Farbmittel, insbesondere Nanopartikel, werden vorteilhaft in einer Polymermatrix, insbesondere auf Basis eines thermoplastischen Polymers, eines thermisch härtbaren Polymers, oder eines (thermisch und) UV-härtenden Polymers, gemischt bzw. dispergiert.

Bevorzugt erfolgt die mechanische Tröpfchenbildung durch ein Ink-Jet-Verfahren, insbesondere im Drop-on-Demand-Verfahren oder im Continuous-Ink-Jet-Verfahren.

Im Drop-on-Demand-Verfahren wird ein Komposittröpfchen jeweils auf eine explizite Ansteuerung hin erzeugt. Beispielsweise wird bei Verwendung eines thermischen Druckkopfes die das Bindemittel und die Farbmittel (Nanopartikel/Farbstoff) umfassende Gemisch (Dispersion/Lösung) durch einen kurzen Heizpuls erhitzt, und durch die Ausdehnung des Gemischs bzw. durch sich ausbildende Dampfblasen ein kleines Gemisch(Komposit)-Tröpfchen aus der Düsenöffnung des Druckkopfes herausgedrückt.

Bei einem ebenfalls sehr gut geeigneten Piezo-Druckkopf verändert ein Piezoelement kurzzeitig das Volumen einer Gemischkammer, so dass ein kleines Gemischtröpfchen durch eine Düsenöffnung des Druckkopfes herausgedrückt wird. Durch eine Veränderung der Ansteuerungsparameter des Piezoelements können sogar bei Nutzung desselben Druckkopfes mehrere, beispielsweise 8 unterschiedliche Tröpfchengrößen erzeugt werden. Als Piezo-Druckkopf kann beispielsweise ein XAAR 1001 oder ein Kyocera KJ4A-RH Druckkopf zum Einsatz kommen. Besonders bevorzugt sind derzeit Piezo-Druckköpfe mit Side-Shooter Technologie, da diese eine hohe Zuverlässigkeit, insbesondere bezüglich Haltbarkeit, Entlüftung und Vermeidung von Sedimentationen, mit einer hohen Tröpfchen-Frequenz und einer breiten Materialeignung einschließlich abrasiver Materialen verbinden.

Anstelle des Drop-on-Demand-Verfahrens kann auch das Continuous-Ink-Jet-Verfahren zum Einsatz kommen, bei dem kontinuierlich kleine Gemischtröpfchen (Komposittröpfchen) erzeugt werden, die zwischen Elektrodenplatten zunächst elektrisch geladen werden und dann mit Hilfe einer Ablenkeinrichtung unterschiedlich stark ausgelenkt werden können.

Die bei dem Verfahren verwendeten Ink-Jet-Druckköpfe weisen vorteilhaft mehrere Düsen auf, so dass mehrere Komposittröpfchen gleichzeitig oder kurz nacheinander erzeugt werden können. Durch eine Aneinanderreihung mehrerer Druckköpfe lässt sich der Ausstoß an Komposittröpfchen weiter steigern.

Mit Hilfe der Ink-Jet-Technologie können sehr kleine Komposittröpfchen wohldefinierter Größe erzeugt werden. Bei Drop-on-Demand -Systemen liegt das Volumen der erzeugten Tröpfchen typischerweise zwischen etwa 1 pl und 40 pl, wobei ein 1 pl-Tropfen einen Durchmesser von 12,4 µm aufweist. Mit besonders angepassten Systemen, wie sie beispielsweise zum Druck von Nanostrukturen eingesetzt werden, können auch kleinere Tropfenvolumina bis herab zu 50 fl erzeugt werden, entsprechend einem Durchmesser von nur 4,6 µm.

Zur mechanischen Tröpfchenbildung können auch Verfahren der Mikrofluidik genutzt werden, mit denen es möglich ist, Partikel mit einem Durchmesser bis herab zu etwa 5 µm zu erzeugen. Ein weiteres geeignetes Verfahren zur Erzeugung kleiner Tröpfchen bzw. Partikel ist die sogenannte Miniemulsionspolymerisation. Schließlich kann die mechanische Tröpfchenbildung auch mit Hilfe eines Systems auf Basis von Überdrucktöpfen mit Sprühdüse und Pralltopf erfolgen, auch wenn dabei die Tröpfchengröße nicht in gleichem Maß reproduzierbar eingestellt werden kann wie mit der Ink-Jet-Technologie.

Die Verfestigung der flüssigen Komposittröpfchen erfolgt in einer vorteilhaften Ausgestaltung durch Erstarren des Bindemittels, insbesondere eines thermoplastischen Polymers. Vorzugsweise erfolgt die Verfestigung durch Erstarren der Komposittröpfchen in Luft oder durch Auffangen der Komposittröpfchen in einem gekühlten Fluid, beispielsweise Wasser. Das Bindemittel mit den dispergierten Nanopartikeln wird dabei vorteilhaft bei einer hohen Temperatur, beispielsweise 120 °C, verarbeitet und erstarrt beim Eintritt in einen Bereich niedrigerer Temperatur, beispielsweise beim Austritt aus der Düsenöffnung eines Ink-Jet-Druckkopfs in Umgebungsluft.

Gemäß einer anderen, ebenfalls vorteilhaften Ausgestaltung erfolgt die Verfestigung der flüssigen Komposittröpfchen durch Beaufschlagung des Bindemittels, insbesondere eines thermisch härtbaren Polymers, mit Wärme. Vorzugsweise erfolgt die Verfestigung durch Beaufschlagung der Komposittröpfchen mit Heißluft oder durch Infrarot-Bestrahlung der Komposittröpfchen, insbesondere mit einer fokussierten IR-Lampe.

Gemäß einer weiteren, ebenfalls vorteilhaften Ausgestaltung erfolgt die Verfestigung der flüssigen Komposittröpfchen durch UV-Härtung des Bindemittels, insbesondere eines UV-härtenden Polymers. Vorzugsweise erfolgt die Verfestigung durch UV-Bestrahlung der Komposittröpfchen mit UV-LEDs, und/ oder durch einen UV-Trockner auf Basis einer Quecksilberlampe. In einer besonders vorteilhaften Ausgestaltung werden die Komposittröpfchen mit UV-LEDs lediglich angehärtet und die angehärteten Komposittröpfchen werden dann in einer Flüssigkeit, beispielsweise Wasser, durch die UV-Strahlung einer Quecksilberlampe nachgehärtet. Auf diese Weise wird ein Verkleben der erzeugten Kompositpartikel untereinander wirkungsvoll verhindert.

Auch eine Kombination der genannten Verfestigungsverfahren ist möglich, beispielsweise beim Einsatz eines kombiniert härtenden Polymers (etwa UV und thermisch).

Um bei der Verfestigung ein Verkleben der Komposittröpfchen zu vermindern oder auszuschließen kann die Vereinzelung der Komposittröpfchen optimiert werden, beispielsweise indem bei einem Druckkopf mit mehreren Düsenöffnungen nur bei jeder zweiten oder dritten Düse alternierend ein Tröpfchen erzeugt wird, um den Abstand benachbarter Tröpfchen in zwei Raumrichtungen zu vergrößern. Bei einem Continuous-Ink-Jet- Verfahren kann beispielsweise jedes zweite oder dritte Tröpfchen unterschiedlich weit ausgelenkt werden, oder es kann nur ein Teil der Tröpfchen an einem Fangröhrchen vorbei geleitet und die Härtung erst nach dem Passieren des Fangröhrchens eingeleitet werden.

Die Erfindung enthält weiter ein Verfahren zur Herstellung von Mikrokapseln für den Sicherheitsdruck, bei dem feste, Nanopartikel enthaltende Kompositpartikel mit einem Verfahren der beschriebenen Art erzeugt, und in einer flüssigkeitsgefüllten Mikrokapsel verkapselt werden.

Die Mikrokapseln weisen dabei mit Vorteil einen Durchmesser zwischen 1 µm und 200 µm, vorzugsweise zwischen 2 µm und 80 µm auf. Es versteht sich, dass der Durchmesser der Mikrokapseln mit Vorteil auf die Größe der verkapselten Kompositpartikel abgestimmt ist. Die Wandstärke der Mikrokapseln liegt typischerweise zwischen 2% und 30%, vorzugsweise zwischen 5% und 15% des Durchmessers der Mikrokapseln, beispielsweise bei 0,5 µm für 5 µm große Kapseln.

Gegenstand der Erfindung sind auch Kompositpartikel zur Verwendung als Füllmaterial von Mikrokapseln oder als Druckfarbe für den Sicherheitsdruck, die nach einem Verfahren der beschriebenen Art herstellbar sind, und die eine verfestigte Bindemittelmatrix enthalten, in der Nanopartikel oder Farbstoffe mit gewünschten Eigenschaften dispergiert sind.

Die Nanopartikel umfassen dabei vorteilhaft superparamagnetische Partikel, vorzugsweise mit Teilchengrößen zwischen 5 nm und 500 nm, IR-absorbierende Nanopigmente, Titandioxid-Nanopigmente, Lumineszenz-Nanopigmente, oder eine Kombination der genannten Nanopartikel.

Die Farbmittel sind mit Vorteil in einer Polymermatrix, insbesondere auf Basis eines thermoplastischen Polymers, eines thermisch gehärteten Polymers, oder eines (thermisch und) UV-gehärtetem Polymers eingebunden.

Die Kompositpartikel können grundsätzlich beliebige Form aufweisen, sind jedoch mit besonderem Vorteil ellipsoid- oder kugelförmig. Die Größe der Kompositpartikel liegt zweckmäßig unterhalb von 10 µm, bevorzugt unterhalb von 2 µm, besonders bevorzugt unterhalb von 1 µm und insbesondere zwischen 100 nm und 999 nm. Die Kompositpartikel können jeweils nur gleichartige Farbmittel, insbesondere Nanopartikel oder Farbstoffe, enthalten, können aber auch eine Mischung unterschiedlicher Farbmittel, insbesondere Nanopartikel und/ oder Farbstoffe, enthalten. Gleichartige Farbmittel sind bezüglich Material und/ oder Form und/ oder Größe gleichartig. Neben den Nanopartikeln können die Kompositpartikel auch andere Bestandteile, beispielsweise gelöste organische Farbstoffe enthalten.

Die Erfindung enthält weiter Mikrokapseln für den Sicherheitsdruck, mit einer Kapselhülle und einem in der Kapselhülle eingeschlossenen Trägerfluid, in dem zumindest ein Kompositpartikel der beschriebenen Art, oder ein nach einem Verfahren der beschriebene Art herstellbares Kompositpartikel dispergiert ist. Die in der Mikrokapsel eingeschlossenen Kompositpartikel können alle gleichartig sein, es ist jedoch auch möglich, unterschiedliche Kompositpartikel, also insbesondere Kompositpartikel mit unterschiedlichen Nanopartikeln, in einer Mikrokapsel zu verkapseln.

Weiter enthält die Erfindung ein Sicherheitselement zur Absicherung von Wertgegenständen mit einer mikrokapselbasierten Farbschicht, die in einem Bindemittel eine Vielzahl von Mikrokapseln mit einer Kapselhülle und einem in der Kapselhülle eingeschlossenen Trägerfluid enthält, in welchem zumindest ein Kompositpartikel der beschriebenen Art, oder ein nach einem Verfahren der beschriebene Art herstellbares Kompositpartikel dispergiert ist.

Die Kompositpartikel werden bevorzugt in eine Mikrokapsel eingebunden und anschließend in der Mikrokapsel gedruckt.

Schließlich enthält die Erfindung auch eine Vorrichtung zum Erzeugen Kompositpartikel nach einem Verfahren der beschriebenen Art, mit
- Mitteln zum Mischen von Farbmitteln mit gewünschten Eigenschaften, insbesondere Dispergieren von Nanopartikeln, in einem Bindemittel,
- Mitteln zum Erzeugen von flüssigen, Farbmittel enthaltenden Komposittröpfchen durch mechanische Tröpfchenbildung aus dem erzeugten Gemisch, und
- Mittel zum Verfestigen der flüssigen Komposittröpfchen zu festen, Farbmittel enthaltenden Kompositpartikeln.

Die Mittel zum Erzeugen flüssiger Komposittröpfchen umfassen vorteilhaft einen Ink-Jet-Druckkopf, insbesondere einen thermischen Druckkopf oder einen Piezo-Druckkopf oder ein Continuous-Ink-Jet-Druckkopf, wie an anderer Stelle bereits ausführlich beschrieben.

Die Mittel zum Verfestigen der flüssigen Komposittröpfchen umfassen bevorzugt eine Heißluftquelle, eine Infrarotlampe, vorzugsweise eine fokussierende Infrarotlampe, eine UV-Lampe, vorzugsweise eine fokussierende UV-Lampe, insbesondere in Form von UV-LEDs, oder einen UV-Trockner auf Basis einer Quecksilberlampe.

Insgesamt kann durch die erfindungsgemäße Lösung neben den bereits beschriebenen Vorteilen eine besonders hohe Konzentration von Nanopartikeln mit gewünschten Eigenschaften in den Mikrokapseln erreicht werden. Die Nanopartikeln sind dabei insbesondere voneinander räumlich getrennt in dem Kompositpartikel verteilt und weisen mit besonderem Vorteil sogar eine homogene Verteilung innerhalb des Kompositpartikels auf. Die erzeugten Kompositpartikel haben darüber hinaus den besonderen Vorteil, dass sie gegenüber herkömmlich aggregierten Nanopartikel-Partikeln eine sehr geringe spezifische Oberfläche aufweisen. Mit den hier beschriebenen Verfahren ist es insbesondere möglich, kleine, in Form, Größe und Zusammensetzung reproduzierbare Kompositpartikel zu erzeugen. Wie an anderer Stelle bereits geschildert, müssen die in einem Kompositpartikel eingeschlossenen Nanopartikel nicht alle gleichartig sein, so dass für bestimmte Anwendungen maßgeschneidert besondere Kombinationen von Nanopartikeln in den Kompositpartikeln verpackt werden können. Darüber hinaus wird die Verwendung unterschiedlicher Kapselinhalte vereinfacht und unterstützt, sowohl als Gemisch in der Kapsel als auch als schnell ausgetauschter Kapselinhalt ohne eine neue Kapselhülle bzw. neues Trägerfluid.

Durch den Anteil der in dem Bindemittel dispergierten Nanopartikel und die durch die Verfahrensführung in weitem Bereich einstellbare Größe der Kompositpartikel kann eine sehr gut definierte Anzahl von Nanopartikeln in den Kompositpartikeln untergebracht werden. Die beschriebenen, Nanopartikel enthaltenden Kompositpartikel können daher nicht nur als Füllmaterial für Mikrokapseln dienen, sondern können auch bei anderen Anwendungen mit Vorteil eingesetzt werden.

Weitere Ausführungsbeispiele sowie Vorteile der Erfindung werden nachfolgend anhand der Figuren erläutert, bei deren Darstellung auf eine maßstabs- und proportionsgetreue Wiedergabe verzichtet wurde, um die Anschaulichkeit zu erhöhen.

Es zeigen:
- Fig.1: schematisch eine Banknote mit einer auf das Banknotenpapier aufgedruckten mikrokapselbasierten Farbschicht,
- Fig. 2: schematisch eine Mikrokapsel mit verkapselten Kompositpartikeln in einer mikrokapselbasierten Farbschicht, und
- Fig. 3: schematisch eine Vorrichtung zum Erzeugen von Kompositpartikeln, wobei (a) und (b) Zwischenschritte bei der Erzeugung und Verfestigung der Kompositpartikel illustrieren.

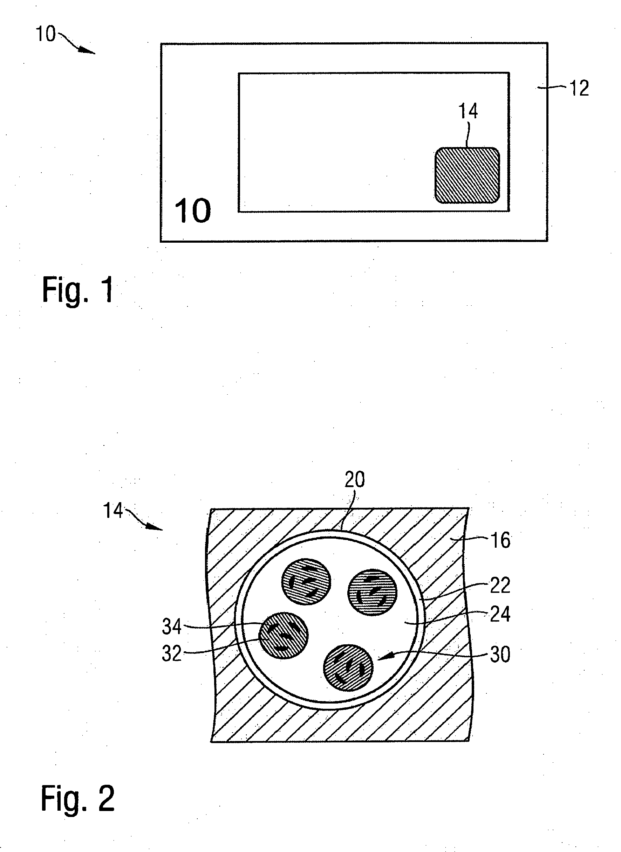

Die Erfindung wird nun am Beispiel der Absicherung von Banknoten und anderen Wertdokumenten erläutert. Figur 1 zeigt dazu eine schematische Darstellung einer Banknote 10 mit einer auf das Banknotenpapier 12 aufgedruckten mikrokapselbasierten Farbschicht 14.

Mit Bezug auf Fig. 2 enthält die Farbschicht 14 in einem Bindemittel 16 eine Vielzahl von Mikrokapseln 20, die im Ausführungsbeispiel einen mittleren Durchmesser d₉₅ von beispielsweise 15 µm haben. Allgemein kann der Durchmesser der Mikrokapseln zwischen 1 µm und 200 µm, vorzugsweise zwischen 2 µm und 80 µm liegen.

Jede der Mikrokapseln 20 weist eine Kapselhülle 22 und ein in der Kapselhülle 22 eingeschlossenes Trägerfluid 24 auf, in dem kugelförmige Kompositpartikel 30 dispergiert sind. Die Größe der Kompositpartikel 30 liegt im Allgemeinen unterhalb von 10 µm, bevorzugt sogar unterhalb von 1 µm, und liegt im Ausführungsbeispiel konkret bei etwa 500 nm. Die Kompositpartikel 30 enthalten jeweils eine verfestigte Polymermatrix 32, in der eine Vielzahl von Magnetit-Nanopartikeln 34 mit einer Größe von nur 6 bis 12 nm dispergiert ist.

Die nach den in dieser Anmeldung beschriebenen Verfahren hergestellten Kompositpartikel 30 weisen alle dieselbe Partikelform und im Wesentlichen dieselbe Partikelgröße auf. Gerade bei Mikrokapseln 20 mit magnetischen Inhaltspigmenten ist es von besonderer Bedeutung, dass sich die Inhaltspigmente im Inneren der Mikrokapsel 20 durch eine äußere magnetische Kraft möglichst frei bewegen können. Dies erfordert eine gute Stabilisierung und Redispergierbarkeit der Inhaltspigmente im Trägerfluid 24, welche vorliegend durch die Kompositpartikel 30 und der Auswahl des Trägerfluids sichergestellt wird. Die Einbettung der Magnetit-Nanopartikel 34 in die Polymermatrix 32 hat weiter den besonderen Vorteil, dass sich die Nanopartikel 34 nicht gegenseitig magnetisieren und dadurch unerwünschte kettenartige Strukturen ausbilden können.

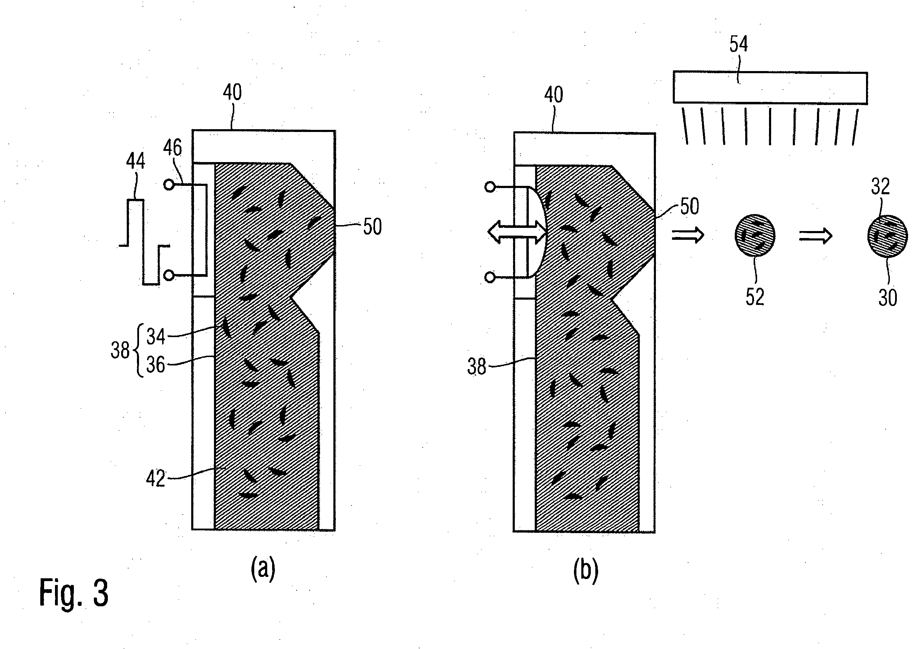

Ein Verfahren und eine Vorrichtung zum Erzeugen der Kompositpartikel 30 im Ink-Jet-Verfahren werden nunmehr mit Bezug auf Fig. 3 näher erläutert.

Zunächst zeigt Fig. 3(a) schematisch den Piezo-Druckkopf 40 einer Vorrichtung zum Erzeugen von Kompositpartikeln 30. Vorbereitend werden Nanopartikel mit gewünschten Eigenschaften, im Ausführungsbeispiel Magnetit-Nanopartikel 34 bereitgestellt, und in einem UV-härtenden Polymer 36 dispergiert. Die so erzeugte flüssige Dispersion 38 wird über eine Dispersionskammer 42 dem Druckkopf 40 mit der Düsenöffnung 50 zugeführt.

Ein Piezoelement 46 wird sich durch einen kurzen Spannungspuls 44 zur Bewegung angeregt. Das Piezoelement 46 bewegt sich zunächst nach links und dann nach rechts (siehe Fig. 3b). Durch die Bewegung des Piezoelements 46 wird ein kleines Tröpfchen 52 der Dispersion 38 aus der Düsenöffnung 50 des Druckkopfes 40 herausgedrückt.

Das nach dem Austritt aus der Düsenöffnung 50 noch flüssige Komposittröpfchen 52 wird durch UV-LEDs 54 fokussiert mit UV-Strahlung beaufschlagt und das UV-härtende Polymermaterial 36 des Tröpfchens dadurch gehärtet. Das flüssige Komposittröpfchen 52 wird auf diese Weise zu einem festen Kompositpartikel 30 mit gehärteter Polymermatrix 32 und darin fixierten Nanopartikeln 34 verfestigt.

Durch die Fokussierung der UV-LEDs wird eine Härtung der Dispersion 38 am Düsenaustritt 50 verhindert. Bei einer besonders vorteilhaften Verfahrensführung werden die flüssigen Komposittröpfchen 52 zunächst mit den UV-LEDs 54 nur angehärtet, um ein Verkleben der erzeugten Kompositpartikel untereinander sicher zu verhindern, und die angehärteten Kompositpartikel dann in einer Flüssigkeit, beispielsweise Wasser, durch die UV-Strahlung einer Quecksilberlampe nachgehärtet. In einer alternativen Ausgestaltung ist das Gemisch, hier die Dispersion 38, im Druckkopf 40 erhitzt bzw. temperiert, beispielsweise auf 40 bis 100 Grad Celsius. Das flüssige Komposittröpfchen 52 kühlt ab und erstarrt (thermisch). Zudem wird es mittels der UV-Strahlung nachgehärtet, so dass der feste Kompositpartikel 30 entsteht.

Um einer Kumulierung der Komposittröpfchen 52 vor oder während der Härtung weiter entgegenzuwirken, kann im Bereich des Druckkopfes 40 zusätzlich ein Luftvorhang vorgesehen sein. Dieser verhindert, insbesondere wenn zur Parallelisierung mehrere Druckköpfe 40 nebeneinander betrieben werden, dass benachbarte Luftströmungen zu einer unkontrollierten Ablenkung der Tröpfchenstrahlen führen. Um ein Verkleben der Tröpfchen zu vermeiden kann zusätzlich mit einem Unterdruck entgegengesetzt zum Druckkopf 40 gearbeitet werden, der die Komposittröpfchen 52 vom Druckkopf weg beschleunigt und dadurch den Abstand der Komposittröpfchen 52 untereinander vergrößert.

Anstellen des beispielhaft beschriebenen thermischen Druckkopfes 40 kann für die Erzeugung der Komposittröpfchen 52 mit besonderem Vorteil auch ein Piezo-Druckkopf eingesetzt werden, oder es kann das oben genauer beschriebene Continuous Ink Jet-Verfahren zur Erzeugung der Komposittröpfchen verwendet werden.

Im gezeigten Ausführungsbeispiel enthält die Dispersion 38 nur eine einzige Sorte von Nanopartikeln 34. Grundsätzlich können in der Polymermatrix eines Kompositpartikels jedoch auch unterschiedliche Nanopartikel mit unterschiedlichen Eigenschaften dispergiert sein. Beispielsweise können zwei oder mehr Nanopartikel mit unterschiedlichen magnetischen Eigenschaften, IR-absorbierende Nanopartikel, UV-absorbierende Nanopartikel, und/ oder Lumineszenz-Nanopartikel in der Dispersion 38 gemischt sein und als Folge auch in Kombination in den erzeugten festen Kompositpartikeln vorliegen.

### Bezugszeichenliste

- 10: Banknote
- 12: Banknotenpapier
- 14: mikrokapselbasierte Farbschicht
- 16: Zweites Bindemittel
- 20: Mikrokapsel
- 22: Kapselhülle
- 24: Trägerfluid
- 30: Kompositpartikel
- 32: verfestigte Polymermatrix
- 34: Magnetit- Nanopartikel
- 36: UV-härtendes Polymer
- 38: Dispersion
- 40: thermischer Druckkopf
- 42: Dispersionskammer
- 44: Spannungspuls
- 46: Piezoelement
- 48: Dampfblasen
- 50: Düsenöffnung
- 52: noch flüssiges Komposittröpfchen
- 54: UV-LEDs

## Patentansprüche

1. Verfahren zum Erzeugen von Kompositpartikeln (30) zur Verwendung als Füllmaterial von Mikrokapseln oder als Druckfarbe, bei dem
- Farbmittel (34) mit gewünschten Eigenschaften bereitgestellt und in einem Bindemittel (36) gemischt werden,
- aus dem erzeugten Gemisch (38) durch mechanische Tröpfchenbildung flüssige, Farbmittel (34) enthaltende Komposittröpfchen (52) erzeugt werden, und
- die flüssigen Komposittröpfchen (52) verfestigt werden um feste, Farbmittel enthaltende Kompositpartikel (30) zu erzeugen.

2. Verfahren nach Anspruch 1, **dadurch gekennzeichnet, dass** das Farbmittel Nanopartikel umfasst, die in dem Bindemittel (36) dispergiert werden.

3. Verfahren nach Anspruch 2, **dadurch gekennzeichnet, dass** als Nanopartikel superparamagnetische Partikel, vorzugsweise mit Teilchengrößen zwischen 5 nm und 500 nm, IR-absorbierende Nanopigmente, Titandioxid-Nanopigmente, Lumineszenz-Nanopigmente, oder eine Kombination der genannten Nanopartikel bereitgestellt und in dem Bindemittel dispergiert werden.

4. Verfahren nach einem der vorhergehenden Ansprüche, **dadurch gekennzeichnet, dass**
die Farbmittel Farbstoffe sind oder zusätzlich Farbstoffe umfassen und/oder;
die Farbmittel in einer Polymermatrix, insbesondere auf Basis eines thermoplastischen Polymers oder eines thermisch und/ oder UV- härtbaren Polymers, vorliegen.

5. Verfahren nach einem der vorhergehenden Ansprüche, **dadurch gekennzeichnet, dass** die mechanische Tröpfchenbildung durch ein Ink-Jet-Verfahren, insbesondere im Drop-on-Demand-Verfahren oder im Continuous-Ink-Jet-Verfahren erfolgt.

6. Verfahren nach einem der vorhergehenden Ansprüche, **dadurch gekennzeichnet, dass**
die Verfestigung der flüssigen Komposittröpfchen durch Erstarren des Bindemittels, insbesondere eines thermoplastischen Polymers, erfolgt, vorzugsweise dass die Verfestigung durch Erstarren der Komposittröpfchen in Luft oder durch Auffangen der Komposittröpfchen in einem gekühlten Fluid erfolgt; oder
die Verfestigung der flüssigen Komposittröpfchen durch Wärmebeaufschlagung des Bindemittels, insbesondere eines zumindest thermisch härtbaren Polymers, erfolgt, vorzugsweise dass die Verfestigung durch Beaufschlagung der Komposittröpfchen mit Heißluft oder durch Infrarot-Bestrahlung der Komposittröpfchen, insbesondere mit einer fokussierten IR-Lampe erfolgt.

7. Verfahren nach einem der Ansprüche 1 bis 6, **dadurch gekennzeichnet, dass** die Verfestigung der flüssigen Komposittröpfchen durch UV-Härtung des Bindemittels, insbesondere eines UV-härtenden Polymers, erfolgt, vorzugsweise dass die Verfestigung durch UV-Bestrahlung der Komposittröpfchen mit UV-LEDs, und/ oder durch einen UV-Trockner auf Basis einer Quecksilberlampe erfolgt.

8. Verfahren zur Herstellung von Mikrokapseln für den Sicherheitsdruck, bei dem feste, Farbmittel enthaltende Kompositpartikel nach einem der Ansprüche 1 bis 7 erzeugt und in einer flüssigkeitsgefüllten Mikrokapsel, insbesondere zusammen mit weiteren Partikeln und/ oder weiteren Farbstoffen, verkapselt werden.

9. Kompositpartikel (30) zur Verwendung als Füllmaterial von Mikrokapseln (20) für den Sicherheitsdruck, herstellbar nach einem Verfahren nach einem der Ansprüche 1 bis 7, mit einer verfestigten Bindemittelmatrix (32), in der Farbmittel (34), insbesondere Nanopartikel (34) und/ oder Farbstoffe, mit gewünschten Eigenschaften eingebunden sind.

10. Kompositpartikel (30) nach Anspruch 9, **dadurch gekennzeichnet, dass** die Farbmittel superparamagnetische Nanopartikel, vorzugsweise mit Teilchengrößen zwischen 5 nm und 500 nm, IR-absorbierende Nanopigmente, Titandioxid-Nanopigmente, Lumineszenz-Nanopigmente, Lumineszenzfarbstoffe oder IR-Farbstoffe sind, bevorzugt umfassen die Farbmittel eine Kombination aus den genannten Nanopartikeln und/ oder Farbstoffen.

11. Kompositpartikel (30) nach Anspruch 9 oder 10, **dadurch gekennzeichnet, dass** die Nanopartikel in einer Polymermatrix, insbesondere auf Basis eines thermoplastischen Polymers, eines thermisch gehärteten Polymers, eines UV-gehärtetem Polymers oder eines UV-gehärteten thermoplastischen Polymers dispergiert sind.

12. Kompositpartikel (30) nach wenigstens einem der Ansprüche 9 bis 11, **dadurch gekennzeichnet, dass**
die Kompositpartikel ellipsoid- oder kugelförmig sind; und/oder die Kompositpartikel eine Größe unterhalb von 10 µm, bevorzugt unterhalb von 2 µm, besonders bevorzugt unterhalb von 1 µm, und insbesondere zwischen 50 nm und 999 nm, aufweisen; und/ oder
die Kompositpartikel nur gleichartige Farbmittel, insbesondere nur gleichartige Nanopartikel, enthalten.

13. Mikrokapsel (20) für den Sicherheitsdruck, mit einer Kapselhülle (22) und einem in der Kapselhülle (22) eingeschlossenen Trägerfluid (24), in dem zumindest ein Kompositpartikel (30) nach einem der Ansprüche 9 bis 12 oder ein nach einem der Ansprüche 1 bis 7 herstellbares Kompositpartikel (30) dispergiert ist.

14. Sicherheitselement zur Absicherung von Wertgegenständen mit einer mikrokapselbasierten Farbschicht (14), die in einem Bindemittel eine Vielzahl von Mikrokapseln (20) mit einer Kapselhülle (22) und einem in der Kapselhülle (22) eingeschlossenen Trägerfluid (24) enthält, in welchem zumindest ein Kompositpartikel (30) nach einem der Ansprüche 9 bis 12 oder ein nach einem der Ansprüche 1 bis 7 herstellbares Kompositpartikel (30) dispergiert ist.

15. Vorrichtung zum Erzeugen von Kompositpartikeln zur Verwendung als Füllmaterial von Mikrokapseln oder als Druckfarbe nach einem Verfahren nach einem der Ansprüche 1 bis 7, mit
- Mitteln (42) zum Mischen von Farbmitteln (34), insbesondere Dispergieren von Nanopartikeln, mit gewünschten Eigenschaften in einem Bindemittel (36),
- Mitteln (46,50) zum Erzeugen von flüssigen, Farbmittel enthaltenden Komposittröpfchen durch mechanische Tröpfchenbildung, und
- Mittel (54) zum Verfestigen der flüssigen Komposittröpfchen zu festen, Farbmittel enthaltenden Kompositpartikel.
